# EUROPÄISCHE PATENTSCHRIFT

(11) **EP 3 892 354 B1**
(45) Veröffentlichungstag und Bekanntmachung des Hinweises auf die Patenterteilung: **03.08.2022**
(21) Anmeldenummer: 21164609.6
(22) Anmeldetag: 24.03.2021
(51) Int. Cl.: B01D 46/00, B01D 46/10

(54) **FILTERVORRICHTUNG UND VERFAHREN ZUM WECHSELN EINES FILTERELEMENTES**
FILTER DEVICE AND METHOD FOR REPLACING A FILTER ELEMENT
DISPOSITIF FILTRANT ET PROCÉDÉ DE REMPLACEMENT D'UN ÉLÉMENT DE FILTRE

(30) Priorität: 09.04.2020 DE 102020110082
(43) Veröffentlichungstag der Anmeldung: 13.10.2021
(73) Patentinhaber: Luftechnik Gransee GmbH, 16775 Gransee (DE); Oerlikon Textile GmbH & Co. KG, 42897 Remscheid (DE)
(72) Erfinder: RICKERTS, Stephan, 26623 Großenaspe (DE); CLAUßEN, Ernst, 24888 Steinfeld (DE); PETERSEN, Hauke, 23845 Oering (DE); KNÖDLER, Frank, 24582 Brügge (DE); DITTSCHER, Sonja, 24610 Trappenkamp (DE)
(74) Vertreter: Dantz, Jan Henning

(56) Entgegenhaltungen:
- DE-A1- 2 754 513
- US-A- 3 354 616
- US-A- 5 837 040
- US-A1- 2011 277 441

## Beschreibung

Die vorliegende Erfindung betrifft eine Filtervorrichtung zum Filtern von Partikeln aus einem Luftstrom mit einem Einlasskanal, durch den die zu reinigende Luft strömt, mindestens einem durchströmbaren Filterelement, das auswechselbar in einem Strömungskanal gehalten ist, und einem Auslasskanal, durch den die gereinigte Luft strömt. Ferner betrifft die Erfindung ein Verfahren zum Wechseln eines Filterelementes an einer Filtervorrichtung.

Zum Reinigen eines Luftstromes sind Trommelfilter bekannt, bei denen eine Oberfläche des Trommelfilters über eine Saugdüse gereinigt wird, wie dies aus der DE 28 02 369 A1 bekannt ist. Eine solche Reinigung während des Produktionsprozesses in kontinuierlichem Betrieb ist allerdings für feinere Partikel nur schlecht geeignet.

Die DE 91 01 692 U1 offenbart eine Filtereinrichtung in einem Luftkanalsystem, das auswechselbar ist. Zum Auswechseln wird die Filtervorrichtung mit dem Filterelement vollständig aus der Filtereinrichtung entnommen und einem Reinigungsprozess zugeführt. Der Nachteil bei einer derartigen Filtervorrichtung besteht jedoch darin, dass der Produktionsprozess zum Wechsel der Filterelemente unterbrochen werden muss.

DE 27 54 513 offenbart eine Dichtungsvorrichtung für Filterzellen, bei der zur Entnahme einer gebrauchten Filterzelle ein Polyethylensack um einen Flansch angeordnet wird, und die Filterzelle gegriffen und entnommen werden kann. US 2011/277441 A1, US 5 837 040 A und US 3 354 616 A zeigen weitere Filtervorrichtungen.

Es ist daher Aufgabe der vorliegenden Erfindung, eine Filtervorrichtung zum Filtern von Partikeln aus einem Luftstrom und ein Verfahren zum Wechseln eines Filterelements zu schaffen, die ein Auswechseln eines Filterelementes ohne Prozessunterbrechung ermöglicht und einfach zu bedienen ist.

Diese Aufgabe wird mit einer Filtervorrichtung mit den Merkmalen des Anspruches 1 und einem Verfahren zum Wechseln eines Filterelementes mit den Merkmalen des Anspruches 10 gelöst.

Bei der erfindungsgemäßen Filtervorrichtung wird das Filterelement nicht einfach aus der Ausgabekammer entnommen, sondern zunächst wird eine Abdeckung der Filtervorrichtung an dem Filterelement angebracht, die einen Filterkuchen an dem Filterelement überdeckt, damit die Einheit aus Filterelement und Abdeckung aus der Ausgabekammer entnehmbar ist. Durch das Anbringen der Abdeckung an dem Filterelement wird verhindert, dass sich die Partikel an dem Filterkuchen durch einen Luftstrom lösen und in die Fremdluft gelangen, die von dem Strömungskanal angesaugt wird. Ein solches Ansaugen von Partikeln kann erhebliche Schäden an einem nachfolgenden Gebläse bewirken. Durch das Abdecken des Filterelementes wird die Gefahr eines Lösens des Filterkuchens und ein Verwirbeln von Partikeln stark reduziert, so dass die Filtervorrichtung auch bei drucksensitiven Produktionsprozessen mit hohen Anforderungen an die Luftreinheit, beispielsweise bei der Faserherstellung, eingesetzt werden kann.

Vorzugsweise sind an dem Filterelement Führungsmittel ausgebildet, in die die Abdeckung einschiebbar ist. Das Filterelement kann beispielsweise als Filterkassette ausgebildet sein, bei der um eine Filterfläche ein umlaufender Rahmen vorgesehen ist. An dem Rahmen kann dabei an gegenüberliegenden Wänden jeweils ein Führungsmittel in Form einer Nut oder eine Führungsleiste ausgebildet sein. Dadurch lässt sich die Abdeckung im Wesentlichen über eine Spaltdichtung abgedichtet an der Filterkassette anbringen. Optional können auch elastische Dichtmittel zwischen Abdeckung und Rahmen vorgesehen sein. Die Abdeckung ist vorzugsweise plattenförmig ausgebildet, beispielsweise durch ein Metallblech oder eine Kunststoffplatte. Dabei kann die Abdeckung zumindest teilweise transparent ausgebildet sein, so dass der Filterkuchen auch durch die Abdeckung hindurch sichtbar bleibt.

An der Abdeckung kann eine Rast- oder Riegelmechanik ausgebildet sein, insbesondere an einer Abwinklung zu der plattenförmigen Abdeckung. Die Rast- oder Riegelmechanik kann an dem Filterelement verrastet oder verriegelt werden, beispielsweise über ein Drehteil, das nach Art eines Bajonettverschlusses an dem Filterelement verriegelbar ist. Auch andere Rastmechaniken oder Riegel können zum Fixieren der Abdeckung an dem Filterelement eingesetzt werden.

Vorzugsweise ist an der Abdeckung ein Griffelement vorgesehen, insbesondere an der Abwinklung, mittels der die verriegelte Einheit aus Filterelement und Abdeckung aus der Ausgabekammer herausziehbar ist. An dem Filterelement ist vorzugsweise an der zur Öffnung gewandten Seite der Ausgabekammer kein Griffelement vorgesehen, so dass die Gefahr einer Fehlbedienung verringert wird.

Bei dem erfindungsgemäßen Verfahren wird eine Tür einer Einsteckkammer geöffnet und ein Filterelement eingefügt, bevor die Tür der Einsteckkammer geschlossen wird. Danach wird ein Durchgang von der Einsteckkammer zu einem Strömungskanal geöffnet, in dem ein zu reinigendes Filterelement angeordnet ist. Ferner wird ein Verschlusselement an einer Ausgabekammer geöffnet und das darin angeordnete Filterelement entnommen. Anschließend wird das Verschlusselement der Ausgabekammer geschlossen und das Filterelement von der Einsteckkammer in den Strömungskanal und das in dem Strömungskanal angeordnete Filterelement von dem Strömungskanal in die Ausgabekammer bewegt, wobei für die Entnahme des Filterelementes aus der Ausgabekammer eine Abdeckung auf das Filterelement geschoben wird und die Einheit aus Abdeckung und Filterelement aus der Ausgabekammer zusammen entnommen wird. Dadurch wird eine Kontaminierung durch Ansaugen von Partikeln von dem Filterelement und das Einsaugen in den Strömungskanal weitgehend unterbunden.

Vorzugsweise ist bei der Filtervorrichtung das Verschlusselement der Ausgabekammer über einen Verriegelungsmechanismus in der geschlossenen Position verriegelt ist, wenn die Tür an der Einsteckkammer geöffnet ist, und die Ausgabekammer und die Einsteckkammer mit demselben Strömungskanal verbunden sind. Dadurch kann eine Fehlbedienung beim Auswechseln eines Filterelementes verhindert werden, da sich das Verschlusselement der Ausgabekammer nur dann öffnen lässt, wenn die Tür an der Einsteckkammer geschlossen ist. Der Verriegelungsmechanismus ist dabei an dem gleichen Schacht wirksam, an dem die Einsteckkammer, der Strömungskanal und die Ausgabekammer miteinander verbunden sind und einen gemeinsamen Schacht ausbilden. Der Schacht kann dabei bevorzugt vertikal als Fallschacht ausgerichtet sein, aber auch eine Ausrichtung horizontal oder in eine andere Richtung ist möglich. Die Filtervorrichtung kann in Strömungsrichtung mehrere solcher Schächte hintereinander aufweisen.

Zur Gewährleistung, dass die Tür an der Einsteckkammer und die Öffnung zwischen Einsteckkammer und Strömungskanal nicht gleichzeitig geöffnet sind, kann die Tür zum Öffnen und Schließen der Einsteckkammer zusammen mit der Abdeckung verschiebbar sein. Eine entsprechende Öffnung in der Abdeckung gibt dann die Öffnung zwischen Einsteckkammer und Strömungskanal nur dann frei, wenn die verschiebbare Tür in einer Schließposition angeordnet ist.

Vorzugsweise sind in dem Strömungskanal mindestens zwei hintereinander angeordnete Filterelemente angeordnet, die beispielsweise als Grobfilter und Feinfilter ausgebildet sind. Jedes Filterelement kann eine Filterfläche aufweisen, an der Schwebteile und Partikel aus der Luft herausgefiltert werden, beispielsweise durch Siebe, Gewebe, Drähte oder Vliesmaterialien.

Die Filterelemente sind vorzugsweise durch eine unterschiedliche Geometrie codiert und jeweils nur in eine von zwei benachbarten Einsteckkammern von zwei oder mehr benachbarten Einsteckkammern einschiebbar sind. Dadurch wird gewährleistet, dass jedem Filterelement durch eine bestimmte Geometrie nur eine Einsteckkammer zugeordnet ist, so dass ein Vertauschen der Filterelemente ausgeschlossen wird. Gerade bei Einsatz unterschiedlicher Filterelemente als Grobfilter oder Feinfilter kann durch die Codierung durch eine Geometrie ein Einschieben eines anderen Filterelementes in eine bestimmte Einsteckkammer verhindert werden. Solche Codierungen können beispielsweise durch unterschiedliche Breiten, unterschiedliche Dicken oder andere geometrische Gestaltungen, wie Abschrägungen, Vorsprünge oder Stifte, ausgebildet sein.

Die Erfindung wird nachfolgend anhand eines Ausführungsbeispiels mit Bezug auf die beigefügten Zeichnungen näher erläutert. Es zeigen:
- Figur 1: eine schematische Ansicht einer erfindungsgemäßen Filtervorrichtung;
- Figuren 2A bis 2D: mehrere perspektivische Ansichten der Filtervorrichtung in einer Betriebsposition;
- Figuren 3A bis 3D: mehrere Ansichten der Filtervorrichtung der Figur 2, bei der die erste Einsteckkammer geöffnet ist;
- Figuren 4A bis 4D: mehrere Ansichten der Filtervorrichtung der Figur 2, bei der die erste Ausgabekammer geöffnet ist;
- Figuren 5A und 5B: zwei Detailansichten eines Abdeckelementes zwischen Einsteckkammer und Strömungskanal;
- Figur 6: eine Ansicht eines Filterelementes und einer Abdeckung vor der Montage;
- Figuren 7A bis 7C: mehrere Ansichten des Filterelementes der Figur 6 mit montierter Abdeckung, und
- Figur 8: eine Ansicht von zwei unterschiedlichen Filterelementen.

Eine Filtervorrichtung 1 dient zur Filtration eines Luftstromes, beispielsweise in einer Produktionsanlage für Fasern oder Filamente oder zum Reinigen von Verbrennungsabgasen. Die Filtervorrichtung 1 umfasst einen Einlasskanal 2, an dem die zu reinigende Luft einströmt und einen Auslasskanal 3, aus dem die gereinigte Luft ausströmt. Zwischen dem Einlasskanal 2 und dem Auslasskanal 3 sind eine oder mehrere Kammern in einem Strömungskanal 4 angeordnet, in denen ein Filterelement 8 oder 8' positionierbar ist.

Um das im Strömungskanal 4 angeordnete Filterelement im laufenden Betrieb wechseln zu können, ist benachbart zu dem Strömungskanal 4 eine Einstecckammer 5 und eine Ausgabekammer 6 vorgesehen. Dabei ist ein Einlasskanal 2 mit einer Kammer im dem Strömungskanal 4 verbunden, die wiederum mit dem Auslasskanal 3 verbunden ist. Ein solcher Schacht kann ein oder im Strömungsrichtung gesehen mehrere Male hintereinander angeordnet sein, beispielsweise um ein Filterelement 8 als Grobfilter und ein Filterelement 8' als Feinfilter einzusetzen. Das Auswechseln der gebrauchten Filterelemente 8 oder 8' erfolgt jedoch auf die gleiche Weise.

Im Betrieb wird ein Filterelement 8 oder 8' in dem Strömungskanal 4 angeordnet und ist durch einen Anschlag oder ein Filterelement 8 oder 8' in der Ausgabekammer abgestützt. Zum Einlegen eines neuen Filterelementes 8 oder 8' wird dieses in die zugehörige Einsteckkammer 5 eingesteckt, die dann verschlossen wird. Anschließend wird an der Ausgabekammer 6 ein Filterelement 8 oder 8' entnommen, so dass entweder sofort oder nach Schließen eines Verschlusselementes an der Ausgabekammer 6 das in dem Strömungskanal 4 angeordnete Filterelement 8 oder 8' in die Ausgabekammer 6 verschoben wird, wahlweise über ein Federelement oder die Schwerkraft. Dann kann das in der Einsteckkammer 5 angeordnete Filterelement 8 oder 8' in dem Strömungskanal 4 nachrutschen, wahlweise durch die Schwerkraft oder ein Federelement.

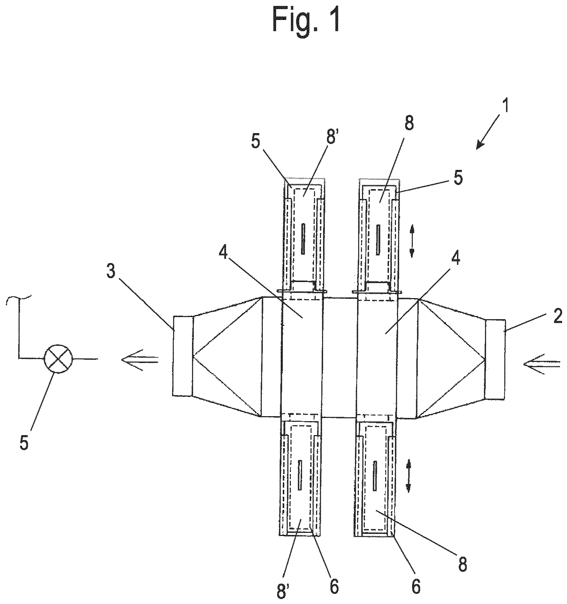

Das in Figur 1 nur schematisch dargestellte Prinzip der Filtervorrichtung wird nun im Detail beschrieben:

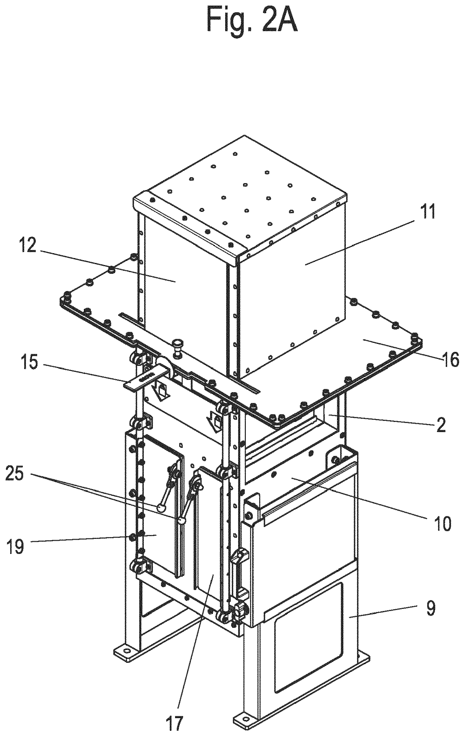

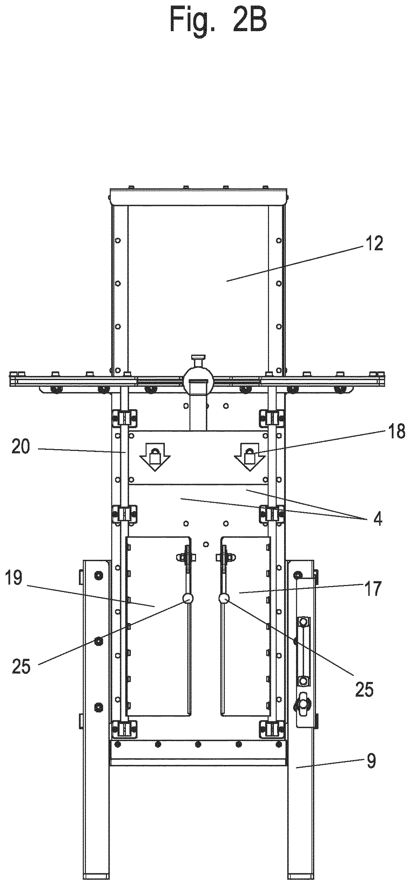

In den Figuren 2A und 2B ist die Filtervorrichtung 1 gezeigt, die ein Gestell 9 aufweist, an dem ein Gehäuse 10 gehalten ist. Das Gehäuse 10 ist in einem mittleren Bereich als Strömungskanal ausgebildet, das auf einer Seite an einen Einlasskanal und auf der gegenüberliegenden Seite an einen Auslasskanal angeschlossen ist. Zwischen dem Einlasskanal 2 und dem Auslasskanal 3 sind an dem Strömungskanal 4 zwei Kammern ausgebildet, an denen jeweils ein Filterelement 8 oder 8' positionierbar ist.

Das Gehäuse 10 weist im oberen Bereich eine Haube 11 auf, an der zwei Einsteckkammern 5 für ein Filterelement 8 bzw. 8' ausgebildet sind. Jede Einsteckkammer 5 ist über eine Tür 12 verschließbar, die als Schiebetür ausgebildet ist und über ein Griffelement 15 verschoben werden kann. In den Figuren 2A und 2B sind beide Öffnungen zu den Einsteckkammern 5 verschlossen.

Unterhalb des Strömungskanals 4 sind zwei Ausgabekammern 6 angeordnet, wobei eine Ausgabekammer 6 über ein Verschlusselement 17 und eine weitere Ausgabekammer über ein Verschlusselement 19 verschließbar sind. Das Verschlusselement 17 ist an einer Achse 18 drehbar gelagert, und das Verschlusselement 19 um eine Achse 20. Die Verschlusselemente 17 und 19 sind jeweils über einen Betätigungshebel 25 in der geschlossenen Position verriegelbar.

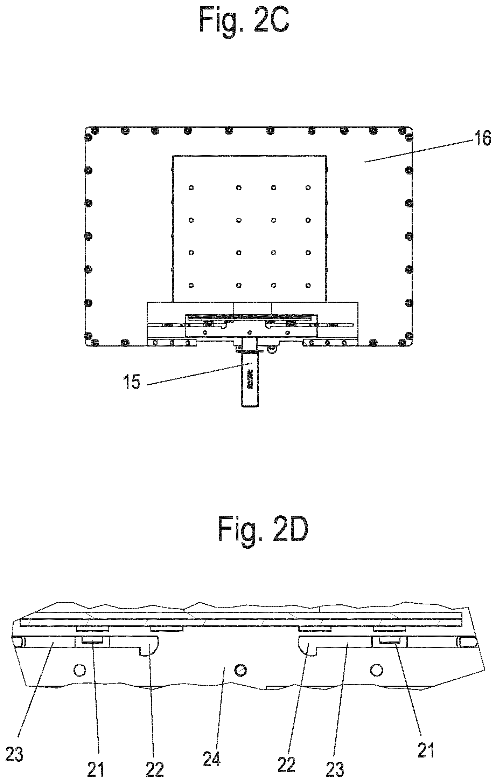

In der Betriebsposition sind die beiden Verschlusselemente 17 und 19 der Ausgabekammern 6 gegen ein Öffnen verriegelt. Hierfür ist ein Blockierelement vorgesehen, das zusammen mit der Tür verschiebbar ist. Wie aus der Draufsicht der Figur 2C und der vergrößerten Ansicht der Figur 2D erkennbar ist, umfasst das Blockierelement einen Schlitz 23, an dem endseitig eine Aufweitung 22 ausgebildet ist. In den Schlitz 23 greift ein Steg 21 ein, der im Querschnitt rechteckförmig ausgebildet ist und durch die Wände an dem Schlitz gegen eine Drehbewegung blockiert wird. Der Steg 21 ist dabei drehfest mit der Achse 18 verbunden oder integral mit dieser ausgebildet. Der Steg 21 auf der linken Seite in Figur 2D ist drehfest mit der Achse 20 verbunden oder integral mit dieser ausgebildet. Durch die Blockierung einer Drehbewegung der Stege 21 wird somit eine Schwenkbewegung der Verschlusselemente 17 und 19 verhindert. In dieser Mittelposition der Tür 12 wird somit ein versehentliches Öffnen der Verschlusselemente 17 und 19 verhindert, da bei einem Auswechselvorgang zunächst ein neues Filterelement 8 oder 8' in eine Einsteckkammer 5 eingeschoben werden muss.

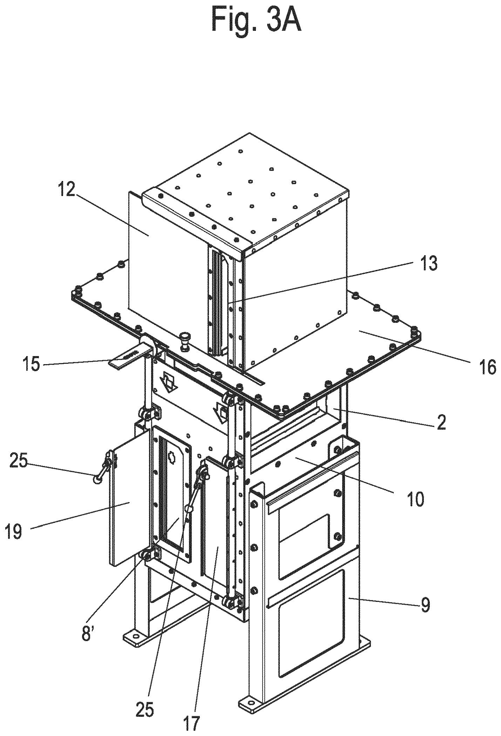

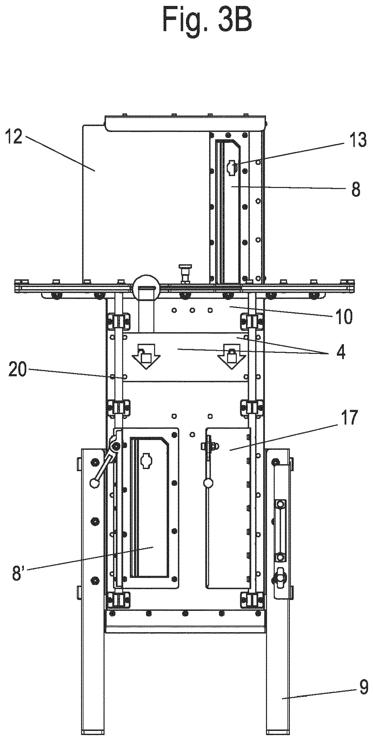

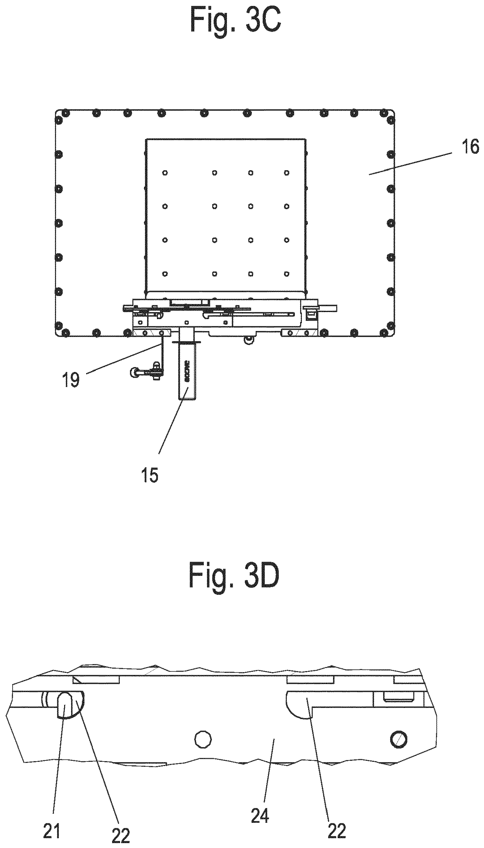

In den Figuren 3A und 3B ist die Filtervorrichtung 1 in einer Position gezeigt, in der die Tür 12 verschoben wurde, um eine Öffnung 13 für die Einsteckkammer 5 auf der rechten Seite zu öffnen. Das Verschieben der Tür 12 erfolgt über das Griffelement 15, mit dem gleichzeitig auch das Blockierelement verschoben wird. Wenn die Einsteckkammer 5 auf der rechten Seite geöffnet ist, kann ein Filterelement 8 eingeschoben werden, wobei die Geometrie der Einsteckkammer 5 auf der rechten Seite so gestaltet ist, dass nur ein bestimmtes Filterelement 8 eingesteckt werden kann, beispielsweise alle Filterelemente 8 gleicher Geometrie, die dann jeweils einen Grobfilter ausbilden.

In dieser Position der Tür 12 kann zudem das Verschlusselement 19 auf der linken Seite geöffnet werden. Dies liegt darin begründet, dass das Blockierelement mit einer Platte 24 verschoben wurde, so dass der Steg 21 an der Achse 20 nun nicht mehr im Bereich des Schlitzes 23 angeordnet ist, sondern im Bereich der Aufweitung 22. Die Aufweitung 22 besitzt eine größere Breite in Längsrichtung des Schlitzes 23 als der Schlitz 23, so dass der Steg 21 zusammen mit der Achse 20 gedreht werden kann, um das Verschlusselement 19 zu öffnen. In dieser Position kann optional das Filterelement 8' in der Ausgabekammer 6 herausgezogen werden.

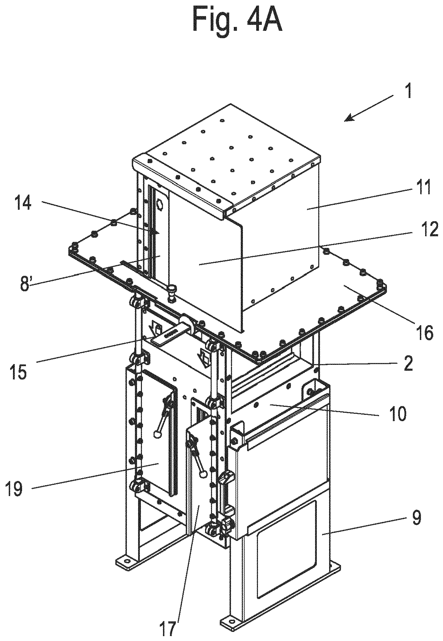

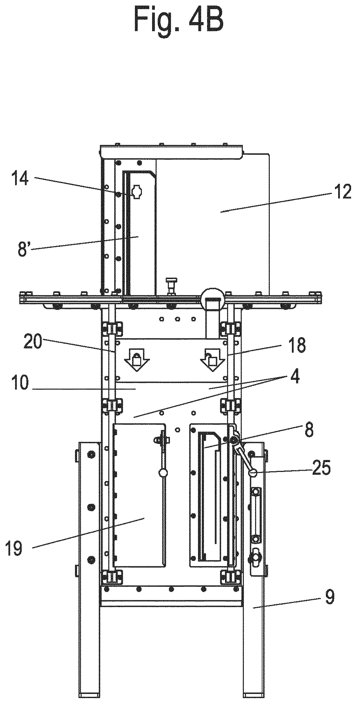

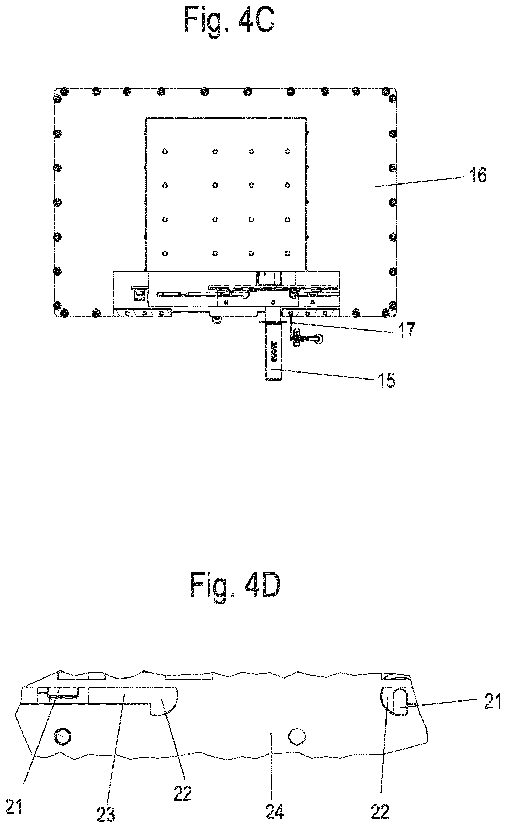

Falls bei dem Filterwechsel zunächst das Filterelement 8 in dem Strömungskanal 4 ausgewechselt werden soll, wird nach dem Einstecken des Filterelementes 8 in die Einsteckkammer 5 die Tür 12 verschlossen und in die in den Figuren 4A und 4B dargestellte Position bewegt. Die Tür 12 verschließt die Öffnung 13 zu der Einsteckkammer 5 auf der rechten Seite, gibt aber eine Öffnung 14 zu der Einsteckkammer 5 auf der linken Seite für ein Filterelement 8' frei. Durch die Bewegung der Tür 12 in die rechte Endposition wurde auch das Blockierelement verschoben, so dass nun der Steg 21, der an der Achse 18 verbunden oder integral ausgebildet ist, in der Aufweitung 22 angeordnet ist, so dass nun das Verschlusselement 17 um die Achse 18 verschwenkt werden kann. In dieser Position kann nun ein Filterelement 8 aus der Ausgabekammer 6 entnommen werden. Durch die Entnahme des in der Ausgabekammer 6 angeordneten Filterelementes 8 kann nun das im Strömungskanal 4 angeordnete, zu wechselnde Filterelement 8 nach unten rutschen, so dass dadurch das Filterelement 8 in der Einsteckkammer 5 in den Strömungskanal 4 nach unten rutschen kann. In der Praxis ist es häufig so, dass das im Strömungskanal 4 befindliche Filterelement 8 durch den zu reinigenden Luftstrom gegen einen Anschlag gedrückt wird, insbesondere wenn Fremdluft durch die geöffnete Ausgabekammer 6 eingesaugt wird. Dann erfolgt ein Verschieben des Filterelementes 8 in dem Strömungskanal und dem Filterelement 8 in der Einsteckkammer 5 erst bei Schließen des Verschlusselementes 17, so dass sich ein Unterdruck in der Ausgabekammer 6 aufbaut, der für ein Ablösen des Filterelementes 8 in dem Strömungskanal 4 sorgt. Optional kann auch über mechanische Mittel ein Verschieben der Filterelemente 8 unterstützt oder angeregt werden.

Nachdem das Filterelement 8 als Grobfilter in dem Strömungskanal 4 gewechselt wurde, kann nun ein Wechsel des Filterelementes 8' als Feinfilter vorgenommen werden, wobei hierfür zunächst ein gereinigtes Filterelement 8' in die Einsteckkammer 5 eingeschoben wird, wenn die Tür 12 in der rechten Endposition gemäß Figur 4B angeordnet ist. Anschließend kann die Tür 12 in die linke Endposition bewegt werden, die in Figur 3B gezeigt ist. In dieser Position ist die linke Einsteckkammer 5 verschlossen und ein Durchgang von der Einstecckammer 5 zu dem Strömungskanal 4 geöffnet. Zudem ist das Verschlusselement 19 zu öffnen, um das Filterelement 8' aus der Ausgabekammer 6 zu entnehmen.

Zur Entnahme der Filterelemente 8 und 8' kann eine Abdeckung 32 in die jeweiligen Filterelement 8 oder 8' eingesteckt werden, die an dem Gestell 9 gelagert werden kann.

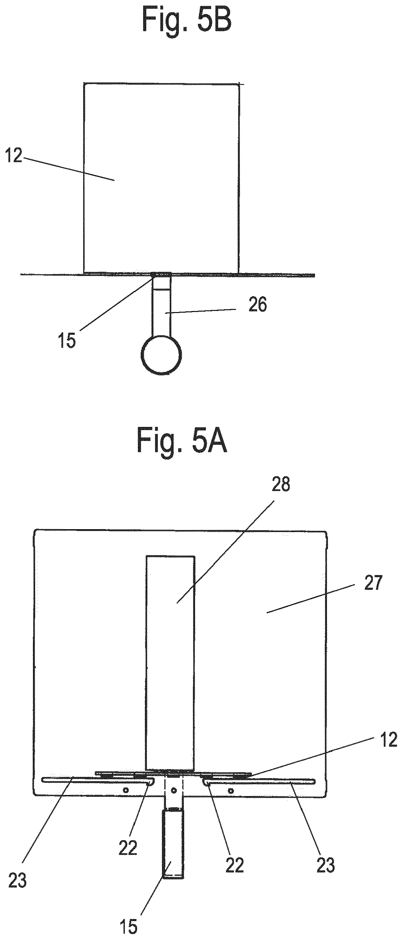

In den Figuren 5A und 5B ist die Tür 12 gezeigt, die zusammen mit einer Abdeckung 27 bewegbar ist. Die Abdeckung 27 weist eine Öffnung 28 auf und kann somit einen Durchgang zwischen einer Einsteckkammer 5 und dem Strömungskanal 4 wahlweise öffnen oder schließen. Die Breite der Öffnung 28 ist so breit ausgebildet, dass alle Filterelemente 8 oder 8' durch die Öffnung 28 hindurchgleiten können. An der Abdeckung 27 ist ein vorderer Bereich auch als Blockierelement ausgebildet, in dem die Schlitze 23 mit der endseitigen Aufweitung 22 ausgespart sind. Dadurch kann mit der Bewegung der Tür 12 über das Griffelement 15 gleichzeitig ein Blockieren der Verschlusselemente 17 und 19 erfolgen, und zudem lässt sich eine Verbindung zwischen einer Einsteckkammer 5 und dem Strömungskanal 4 öffnen und schließen.

Durch die Gestaltung der Tür 12 und der Abdeckung 27 wird bei einem Wechsel eines Filterelementes 8 erreicht, dass die Einsteckkammer 5 zu dem Strömungskanal 4 hin immer geschlossen ist. Wenn die Einsteckkammer an einer frontseitigen Öffnung 13 geöffnet wird, wie dies in Figur 3B gezeigt ist, überdeckt die Abdeckung 27 die Öffnung zu dem Strömungskanal 4, so dass nur ein geringer Anteil an Fremdluft eingesaugt werden kann. Wenn das neue Filterelement 8 in die Einsteckkammer 5 eingefügt ist, kann die Tür 12 in die in Figur 4B gezeigte Position verschwenkt werden, wodurch die Öffnung zwischen der Einsteckkammer 5 und dem Strömungskanal 4 freigegeben wird, da sich dann die Öffnung 28 unter der Einsteckkammer 5 befindet. Der Strömungskanal 4 ist jedoch nach außen abgedichtet, da die Tür 12 geschlossen ist. In dieser Position kann dann das Verschlusselement 17 geöffnet werden, um das Filterelement 8 aus der Ausgabekammer zu entnehmen. Ein Spalt zwischen dem Filterelement 8 in dem Strömungskanal 4 und der Ausgabekammer 6 kann so gering bemessen werden, dass bei der Entnahme des Filterelementes 8 nur geringfügig Fremdluft eingesaugt wird, was jedoch zu vernachlässigbaren Druckschwankungen führt und den Produktionsprozess nicht beeinträchtigt. Ferner ist an dem Griffelement 15 ein Vorsprung als Markierungselement 26 ausgebildet, so dass der Benutzer leichter eine mittlere Schließposition oder eine Öffnungsposition sieht.

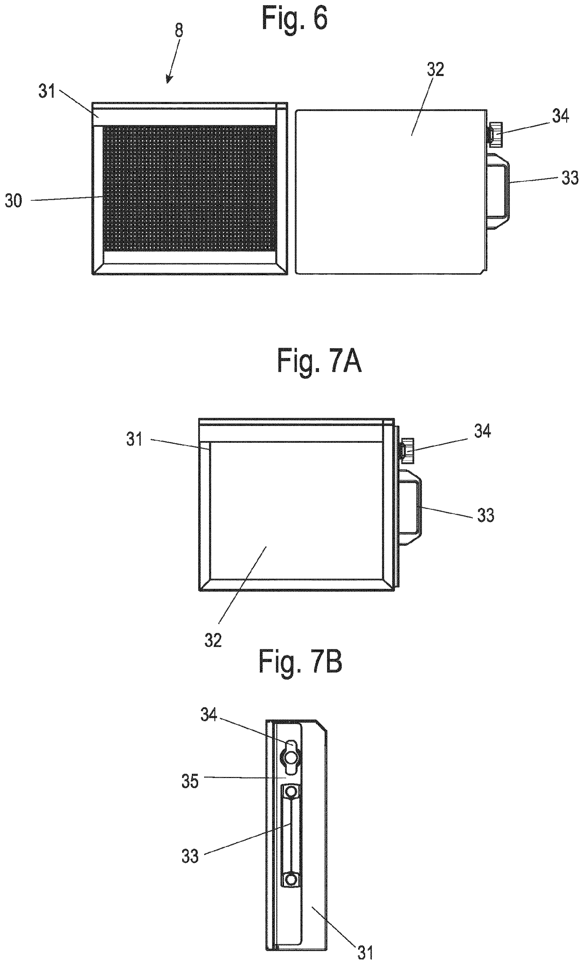

In Figur 6 ist ein Filterelement 8 gezeigt, das eine Filterfläche 30 aufweist, beispielsweise ein Sieb, ein Gewebe, ein Lochgitter oder ein Vliesmaterial, wobei die Filterfläche 30 von einem Rahmen 31 umgeben ist. An dem Rahmen 31 sind Führungsmittel, beispielsweise Nuten, ausgebildet, um die Filterfläche 30 abdecken zu können. Hierbei kann ein Filterkuchen, der sich auf der Filterfläche 30 abgelagert hat, durch die Abdeckung 32 überdeckt werden, so dass bei Entnahme des Filterelementes 8 aus der Ausgabekammer 6 nach Möglichkeit keine Partikel durch die Fremdluft angesaugt werden, die dann in den Strömungskanal 4 gelangt.

Um zu verhindern, dass ein Benutzer das Filterelement 8 manuell ohne die Abdeckung 32 aus der Ausgabekammer 6 entnimmt, ist an der Abdeckung 32 ein Drehteil 34 einer Rast- oder Riegelmechanik vorgesehen. Nach dem Einschieben der Abdeckung 32 auf das Filterelement 8 kann über das Drehteil 34 die Abdeckung 32 an dem Filterelement 8 verriegelt oder verrastet werden, um danach durch ein Griffelement 33 an der Abdeckung 32 die Einheit aus Filterelement 8 und Abdeckung 32 aus der Ausgabekammer 6 herauszuziehen. Das Drehteil 34 kann beispielsweise als Bajonettverschluss ausgebildet sein, der in einer ersten Position in eine Öffnung an dem Filterelement 8 einsteckbar ist und dann durch Drehen um 90° eine Verriegelung bewirkt.

In den Figuren 7A und 7b ist die Abdeckung 32 an dem Filterelement 8 angeordnet, und es ist erkennbar, dass die Abdeckung 32 randseitig von dem Rahmen 31 umgeben ist. Dadurch ist das Filterelement 8 weitgehend abgedichtet. Die Abdeckung 32 ist plattenförmig ausgebildet und kann aus einem Metallblech oder Kunststoff ausgebildet sein, beispielsweise einem transparenten Kunststoff, so dass der innere Bereich des Filterelementes 8 sichtbar bleibt.

Die Abdeckung 32 umfasst eine Abwinklung 35, an der das Drehteil 34 drehbar gelagert ist und an der das Griffelement 33 fixiert ist. Die Abdeckung 32 kann dabei ein- oder mehrteilig ausgebildet sein.

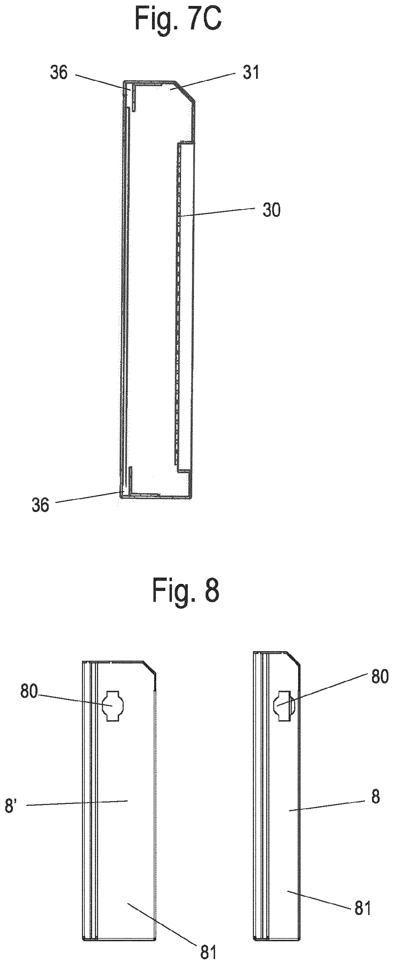

In Figur 7C ist ein Schnitt durch das Filterelement 8 gezeigt, und es ist erkennbar, dass an gegenüberliegenden Seiten eine Nut 36 ausgebildet ist, in die ein Rand der plattenförmigen Abdeckung 32 einschiebbar ist. An der Stirnseite kann dann die Abdeckung 32 über das Drehteil 34 mit dem Rahmen 31 verriegelt werden.

In Figur 8 sind zwei unterschiedliche Filterelemente 8 und 8' gezeigt, die eine unterschiedliche Dicke aufweisen und optional auch in der Höhe unterschiedlich ausgebildet sein können. Dadurch ist sichergestellt, dass nur ein Filterelement 8 eines vorbestimmten Typs jeweils in eine einzige Öffnung der Einstecckammer 5 eingefügt werden kann, so dass eine Fehlbedienung durch die Geometrie der Filterelemente 8 und 8' sicher verhindert wird. Jedes Filterelement 8 umfasst an dem Rahmen 31 eine Öffnung 80, die mit dem Drehteil 34 an der Abdeckung 32 in Eingriff gebracht werden kann. Optional können auch andere Verriegelungsmechaniken oder Rastmechaniken eingesetzt werden, um eine lösbare Verbindung zwischen der Abdeckung 32 und einem Filterelement 8 oder 8' herzustellen.

In dem dargestellten Ausführungsbeispiel weist die Filtervorrichtung 1 zwei in Strömungsrichtung hintereinander angeordnete Schächte auf, wobei jeder Schacht eine verschließbare Einsteckkammer 5, eine Kammer in dem Strömungskanal 4 und eine verschließbare Ausgabekammer 6 aufweist. Es ist natürlich möglich, statt zwei Schächten nur einen Schacht oder mehr als zwei Schächte an einer Filtervorrichtung 1 vorzusehen. In dem dargestellten Ausführungsbeispiel ist die Tür 12 verschiebbar ausgebildet, während die Verschlusselemente 17 und 19 verschwenkbar gelagert sind. Es ist natürlich auch möglich, die Tür 12 ebenfalls verschwenkbar auszubilden, insbesondere kann statt der einteiligen Tür eine mehrteilige Tür mit verschiedenen Flügeln vorgesehen sein. Zudem können auch die Verschlusselemente 17 und 19 statt verschwenkbar auch verschiebbar ausgebildet werden.

### Bezugszeichenliste

- 1: Filtervorrichtung
- 2: Einlasskanal
- 3: Auslasskanal
- 4: Strömungskanal
- 5: Einsteckkammer
- 6: Ausgabekammer
- 8, 8': Filterelement
- 9: Gestell
- 10: Gehäuse
- 11: Haube
- 12: Tür
- 13: Öffnung
- 14: Öffnung
- 15: Griffelement
- 17: Verschlusselement
- 18: Achse
- 19: Verschlusselement
- 20: Achse
- 21: Steg
- 22: Aufweitung
- 23: Schlitz
- 24: Platte
- 25: Betätigungshebel
- 26: Markierungselement
- 27: Abdeckung
- 28: Öffnung
- 30: Filterfläche
- 31: Rahmen
- 32: Abdeckung
- 33: Griffelement
- 34: Drehteil
- 35: Abwinklung
- 36: Nut
- 80: Öffnung

## Patentansprüche

1. Filtervorrichtung (1) zum Filtern von Partikeln aus einem Luftstrom, mit einem Einlasskanal (2), durch den die zu reinigende Luft strömt, mindestens einem durchströmbaren Filterelement (8, 8'), das auswechselbar in einem Strömungskanal (4) gehalten ist, und einem Auslasskanal (3), durch den die gereinigte Luft strömt, **dadurch gekennzeichnet, dass** die Filtervorrichtung (1) eine durch eine Tür (12) verschließbare Einsteckkammer (5), von der ein Filterelement (8, 8') zu dem Strömungskanal (4) zuführbar ist, und eine durch ein Verschlusselement (17, 19) verschließbare Ausgabekammer (6) aufweist, in die ein Filterelement (8, 8') von dem Strömungskanal (4) zuführbar ist, wobei an dem Filterelement (8, 8') eine Abdeckung (32) der Filtervorrichtung (1) anbringbar ist, die einen Filterkuchen an dem Filterelement (8, 8') überdeckt, damit die Einheit aus Filterelement (8, 8') und Abdeckung (32) aus der Ausgabekammer (6) zusammen entnehmbar ist.

2. Filtervorrichtung nach Anspruch 1, **dadurch gekennzeichnet, dass** an dem Filterelement (8, 8') Führungsmittel (36) ausgebildet sind, in die die Abdeckung (32) einschiebbar ist.

3. Filtervorrichtung nach Anspruch 1 oder 2, **dadurch gekennzeichnet, dass** das Filterelement (8, 8') als Filterkassette ausgebildet ist, die um eine Filterfläche (30) einen umlaufenden Rahmen (31) aufweist.

4. Filtervorrichtung nach Anspruch 3, **dadurch gekennzeichnet, dass** an zwei gegenüberliegenden Wänden des Rahmens (31) jeweils ein Führungsmittel (36) in Form einer Nut ausgebildet ist.

5. Filtervorrichtung nach einem der vorhergehenden Ansprüche, **dadurch gekennzeichnet, dass** die Abdeckung (32) plattenförmig ausgebildet ist.

6. Filtervorrichtung nach einem der vorhergehenden Ansprüche, **dadurch gekennzeichnet, dass** eine Rast- oder Riegelmechanik vorgesehen ist, um die Abdeckung (32) an dem Filterelement zu verriegeln.

7. Filtervorrichtung nach Anspruch 6, **dadurch gekennzeichnet, dass** die Rast- oder Riegelmechanik ein Drehteil (34) umfasst, dass nach Art eines Bajonettverschlusses an dem Filterelement (8, 8') verriegelbar ist.

8. Filtervorrichtung nach Anspruch 6 oder 7, **dadurch gekennzeichnet, dass** die Rast- oder Riegelmechanik an einer Abwinklung gehalten ist, die sich winklig von der plattenförmigen Abdeckung (32) erstreckt, insbesondere rechtwinklig.

9. Filtervorrichtung nach einem der vorhergehenden Ansprüche, **dadurch gekennzeichnet, dass** an der Abdeckung (32) ein Griffelement (33) vorgesehen ist, mittels dem die verriegelte Einheit aus Filterelement (8, 8') und Abdeckung (32) aus der Ausgabekammer (6) herausziehbar ist.

10. Verfahren zum Wechseln eines Filterelementes (8, 8') an einer Filtervorrichtung (1), mit den folgenden Schritten:
- Öffnen einer Tür (12) einer Einsteckkammer (5) und Einfügen eines Filterelementes (8, 8');
- Schließen der Tür (12) der Einsteckkammer (5);
- Öffnen eines Durchganges von der Einsteckkammer (5) zu einem Strömungskanal (4), in dem ein zu reinigendes Filterelement (8, 8') angeordnet ist;
- Öffnen eines Verschlusselementes (17, 19) an einer Ausgabekammer (6) und Entnahme eines Filterelementes (8, 8');
- Schließen des Verschlusselementes (17, 19) der Ausgabekammer und Bewegen des Filterelementes (8, 8') von der Einsteckkammer (5) in den Strömungskanal (4) und des Filterelementes (8, 8') von dem Strömungskanal (4) in die Ausgabekammer (6), wobei
- für die Entnahme des Filterelementes (8, 8') aus der Ausgabekammer (6) eine Abdeckung (32) auf das Filterelement (8, 8') geschoben wird und die Einheit aus Abdeckung (32) und Filterelement (8, 8') aus der Ausgabekammer (6) zusammen entnommen wird.

11. Verfahren nach Anspruch 10, **dadurch gekennzeichnet, dass** die Abdeckung nach dem Aufschieben auf das Filterelement (8, 8') an dem Filterelement verrastet oder verriegelt wird.

## Claims

1. Filter device (1) for filtering particles from an air flow, having an inlet channel (2) through which the air to be cleaned flows, at least one filter element (8, 8') through which a flow can pass and which is held replaceably in a flow channel (4), and an outlet channel (3) through which the cleaned air flows, **characterized in that** the filter device (1) has an insertion chamber (5) which can be closed by a door (12) and from which a filter element (8, 8') can be fed to the flow channel (4), and an output chamber (6) which can be closed by a closure element (17, 19) and into which a filter element (8, 8') can be fed from the flow channel (4), wherein a cover (32) of the filter device (1) is attachable to the filter element (8, 8') and covers a filter cake on the filter element (8, 8') so that the unit consisting of filter element (8, 8') and cover (32) can be removed together from the output chamber (6).

2. Filter device according to claim 1, **characterized in that** guide means (36) are formed on the filter element (8, 8'), into which the cover (32) can be inserted.

3. Filter device according to claim 1 or 2, **characterized in that** the filter element (8, 8') is designed as a filter cartridge which has a circumferential frame (31) around a filter surface (30).

4. Filter device according to claim 3, **characterized in that** a guide means (36) in the form of a groove is formed on each of two opposite walls of the frame (31).

5. Filter device according to one of the preceding claims, **characterized in that** the cover (32) is designed in a plate-shaped manner.

6. Filter device according to one of the preceding claims, **characterized in that** a latching or locking mechanism is provided to lock the cover (32) to the filter element.

7. Filter device according to claim 6, **characterized in that** the latching or locking mechanism comprises a rotating part (34) which can be locked to the filter element (8, 8') in the manner of a bayonet catch.

8. Filter device according to claim 6 or 7, **characterized in that** the latching or locking mechanism is held at an angled section extending angularly from the plate-shaped cover (32), in particular at a right angle.

9. Filter device according to one of the preceding claims, **characterized in that** a handle element (33) is provided on the cover (32), by means of which the locked unit consisting of filter element (8, 8') and cover (32) can be pulled out of the output chamber (6).

10. Method for changing a filter element (8, 8') on a filter device (1), comprising the following steps:
- opening a door (12) of an insertion chamber (5) and inserting a filter element (8, 8');
- closing the door (12) of the insertion chamber (5);
- opening a passage from the insertion chamber (5) to a flow channel (4) in which a filter element (8, 8') to be cleaned is arranged;
- opening a closure element (17, 19) on an output chamber (6) and removing a filter element (8, 8');
- closing the closure element (17, 19) of the output chamber and moving the filter element (8, 8') from the insertion chamber (5) into the flow channel (4) and the filter element (8, 8') from the flow channel (4) into the output chamber (6), wherein
- a cover (32) is pushed onto the filter element (8, 8') for removing the filter element (8, 8') from the output chamber (6) and the unit consisting of cover (32) and filter element (8, 8') is removed from the output chamber (6) together.

11. Method according to claim 10, **characterized in that** the cover is latched or locked to the filter element (8, 8') after being slid onto the filter element.

## Revendications

1. Dispositif de filtre (1) pour filtrer des particules d'une veine d'air comprenant un canal d'entrée (2) traversé par l'air à nettoyer, ayant au moins un élément de filtre (8, 8') traversé par le flux, et qui est tenu de manière interchangeable dans un canal de passage (4) ainsi qu'un canal de sortie (3) pour l'air nettoyé,
dispositif (1) **caractérisé par**
une chambre d'enfichage (5) fermée par une porte (12), et par laquelle on introduit un élément de filtre (8, 8') dans le canal de passage (4) ainsi qu'une chambre de sortie (6) fermée par un élément de fermeture (17, 19) et dans laquelle arrive un élément de filtre (8, 8') à partir du canal de passage (4),
l'élément de filtre (8, 8') recevant une couverture (32) du dispositif de filtre (1) couvrant le gâteau de filtre de l'élément de filtre (8, 8') pour que l'unité composée de l'élément de filtre (8, 8') et la couverture (32) puisse être extraite de la chambre de sortie (6).

2. Dispositif de filtre selon la revendication 1,
**caractérisé en ce que**
l'élément de filtre (8, 8') comporte des moyens de guidage (36) dans lesquels se glisse la couverture (32).

3. Dispositif de filtre selon la revendication 1 ou 2,
**caractérisé en ce que**
l'élément de filtre (8, 8') est sous la forme d'une cassette de filtre comportant un cadre périphérique (31) entourant la surface de filtre (30).

4. Dispositif de filtre selon la revendication 3,
**caractérisé en ce que**
deux parois opposées du cadre (31) comportent un moyen de guidage (36) sous la forme d'une rainure.

5. Dispositif de filtre selon l'une des revendications précédentes, **caractérisé en ce que**
la couverture (32) est en forme de plaque.

6. Dispositif de filtre selon l'une des revendications précédentes, **caractérisé en ce qu'**il comporte
un mécanisme d'arrêt ou de verrouillage pour verrouiller la couverture (32) sur l'élément de filtre.

7. Dispositif de filtre selon la revendication 6,
**caractérisé en ce que**
le mécanisme d'arrêt ou de verrouillage comprend une pièce pivotante (34) qui se verrouille d'un verrouillage à baïonnette à l'élément de filtre (8, 8').

8. Dispositif de filtre selon la revendication 6 ou 7,
**caractérisé en ce que**
le mécanisme d'arrêt ou de verrouillage est tenu à une cornière faisant un angle par rapport à la couverture en forme de plaque (32), notamment un angle droit.

9. Dispositif de filtre selon l'une des revendications précédentes,
**caractérisé en ce que**
la couverture (32) a un élément de prise (33) pour tirer la chambre de sortie (6) de l'unité verrouillée composée de l'élément de filtre (8, 8') et de la couverture (32).

10. Procédé de changement d'un élément de filtre (8, 8') d'un dispositif de filtre (1) consistant à effectuer les étapes suivantes :
- ouvrir une porte (12) d'une chambre d'enfichage (5) et introduire un élément de filtre (8, 8'),
- fermer la porte (12) de la chambre d'enfichage (5),
- ouvrir le passage de la chambre d'enfichage (5) au canal de passage (4) dans lequel se trouve un élément de filtre (8, 8') à nettoyer,
- ouvrir un élément de fermeture (17, 19) d'une chambre de sortie (6) et extraire un élément de filtre (8, 8'),
- fermer l'élément de fermeture (17, 19) de la chambre de sortie et déplacer l'élément de filtre (8, 8') de la chambre d'enfichage (5) dans le canal de passage (4) et l'élément de filtre (8, 8') du canal de passage (4) dans la chambre de sortie (6),
procédé selon lequel
- pour extraire l'élément de filtre (8, 8') de la chambre de sortie (6) on glisse une couverture (32) sur l'élément de filtre (8, 8') et extraire de la chambre de sortie (6) l'unité composée de la couverture (32) et de l'élément de filtre (8, 8') ensemble.

11. Procédé selon la revendication 10,
**caractérisé en ce que**
après avoir glissé la couverture sur l'élément de filtre (8, 8') elle s'accroche ou se verrouille sur l'élément de filtre.
